# EUROPÄISCHE PATENTANMELDUNG

(11) **EP 3 331 088 A1**
(43) Veröffentlichungstag der Anmeldung: **06.06.2018**
(21) Anmeldenummer: 17204355.6
(22) Anmeldetag: 29.11.2017
(51) Int. Cl.: H01M 10/44, H01M 10/6567, H01M 10/613, H01M 10/06, H01M 10/20, H01M 4/22

(54) **VORRICHTUNG UND VERFAHREN ZUR ELEKTROCHEMISCHEN BEHANDLUNG VON FAHRZEUGBATTERIEN**

(30) Priorität: 30.11.2016 DE 102016123181
(71) Anmelder: Gerhard Weber Kunststoff-Verarbeitung GmbH, 32429 Minden (DE)
(72) Erfinder: Wenzel, Dirk, 32457 Porta Westfalica (DE)
(74) Vertreter: Kudla, Christof

(57) **Zusammenfassung**

Die Erfindung betrifft eine Vorrichtung zur elektrochemischen Behandlung von Fahrzeugbatterien, die einen Formierungsbehälter mit zumindest einem Stellplatz zur Aufnahme einer Fahrzeugbatterie sowie eine Überlaufrinne mit einem Ablauf umfasst, wobei die Vorrichtung auf der dem Ablauf gegenüberliegenden Seite der Überlaufrinne ein Trägerelement mit zumindest einer Gewindebohrung aufweist, in der eine Gewindespindel angeordnet ist, die mit ihrem dem Ablauf zugewandten Ende die dem Ablauf gegenüberliegende Seite der Überlaufrinne kontaktiert oder mittels eines Verbindungselementes mit der dem Ablauf gegenüberliegenden Seite der Überlaufrinne verbunden ist.

## Beschreibung

Die vorliegende Erfindung betrifft eine Vorrichtung und ein Verfahren zur elektrochemischen Behandlung von Fahrzeugbatterien.

Es ist bekannt, dass Fahrzeugbatterien, z.B. PKW-Batterien oder LKW-Batterien zur Ladung auf sogenannten Stellplätzen in flüssigkeitsgefüllten Becken, den Formierungsbehältern, angeordnet werden. Im Falle bleihaltiger Fahrzeugbatterien erfolgt innerhalb dieser Formierungsbehälter unter Anwendung elektrischer Energie die Umwandlung von Bleisulfat zu Blei, Bleidioxid und Schwefelsäure.

Während der Ladung erwärmen sich die Batterien, weshalb die umgebende Flüssigkeit, welche Wasser enthält oder daraus besteht, eine Kühlwirkung übernimmt, sodass die Temperatur der Batterien während der Ladung 55 °C nicht überschreitet. Die in den Formierungsbehältern befindliche Flüssigkeit wird während der Ladung der Batterien bevorzugt kontinuierlich ausgetauscht, wobei es von essentieller Bedeutung ist, dass die auf den jeweiligen Stellplätzen innerhalb der Formierungsbehälter angeordneten Batterien zu jedem Zeitpunkt gleichmäßig von Flüssigkeit umströmt werden, die Flüssigkeitsoberfläche also zu jedem Zeitpunkt im Wesentlichen plan ist. Um dies zu erreichen, fließt bevorzugt kontinuierlich neue (kältere) Flüssigkeit in die Formierungsbehälter ein, welche einen Teil der bereits in den Behältern enthaltenen (wärmeren) Flüssigkeit verdrängt, sodass durch den ständigen Flüssigkeitsaustausch kontinuierlich Wärme abgeführt wird.

Die verdrängte Flüssigkeit verlässt dabei die Formierungsbehälter jeweils über eine Überlaufrinne. Idealerweise sind also die Formierungsbehälter mit den darin angeordneten Batterien während des gesamten Ladeprozesses bis exakt zur Überlaufrinne mit Flüssigkeit angefüllt.

Um ein gleichmäßiges Abfließen der verdrängten Flüssigkeit zu gewährleisten, muss die Überlaufrinne absolut gerade sein. Im Stand der Technik ist diese daher fest mit dem Formierungsbehälter verbunden, z.B. einteilig mit diesem ausgebildet oder kraftschlüssig, formschlüssig oder stoffschlüssig mit dem Formierungsbehälter verbunden. Dies bringt den Nachteil mit sich, dass die Höhe der Überlaufrinne in dem Formierungsbehälter nicht variabel ist, die verschiedenen Typen aufzuladender Batterien jedoch keine einheitlichen Abmaße aufweisen. In der Folge kann ein aus dem Stand der Technik bekannter Formierungsbehälter immer nur zur Aufladung eines bestimmten Batterietyps verwendet werden. Entsprechend werden für die Vielzahl unterschiedlicher Batterietypen, die es aufzuladen gilt, auch eine Vielzahl unterschiedlich bemessener Formierungsbehälter benötigt, was für die Anlagenbetreiber einen erheblichen Kostenaufwand sowie erhöhten Platzbedarf erfordert.

Die DE 1 163 413 A beschreibt ein Verfahren zum Formieren, Laden und Entladen von Akkumulatoren, bei dem durch Umpumpen des Elektrolyten sowie durch kontinuierliche oder periodische Zugabe von Elektrolyt die Säurekonzentration stets so geregelt wird, dass sie an den jeweiligen Entlade-, Formier- oder Ladestrom angepasst ist.

Die DE 690 11 114 T2 beschreibt ein Verfahren zur elektrochemischen Behandlung eines Stapels von Batterieplatten in einem Formierungsbehälter.

Die DE 14 21 527 A beschreibt eine Batterie, deren Pole von Folien gebildet werden, die gleichzeitig die Wände der Elektrolytkammer bilden.

### Aufgabe der Erfindung

Es ist die Aufgabe der vorliegenden Erfindung, eine alternative Vorrichtung zur elektrochemischen Behandlung von Fahrzeugbatterien bereitzustellen, die die aus dem Stand der Technik bekannten Nachteile überwindet und sich insbesondere dadurch auszeichnet, dass in ihr unterschiedliche Typen von Fahrzeugbatterien bzw. Fahrzeugbatterien mit unterschiedlichen Abmessungen einer elektrochemischen Behandlung unterzogen werden können.

### Allgemeine Beschreibung der Erfindung

Die Erfindung löst diese Aufgabe mit den Merkmalen der Ansprüche und insbesondere mit einer Vorrichtung zur elektrochemischen Behandlung, insbesondere der Ladung bzw. Beladung, von Fahrzeugbatterien, die einen Formierungsbehälter mit zumindest einem Stellplatz zur Aufnahme zumindest einer Fahrzeugbatterie sowie eine Überlaufrinne mit einem Ablauf umfasst, wobei die Vorrichtung auf der dem Ablauf gegenüberliegenden Seite der Überlaufrinne ein Trägerelement mit zumindest einer Gewindebohrung aufweist, in der eine Gewindespindel angeordnet ist, die mit ihrem dem Trägerelement abgewandten bzw. dem Ablauf zugewandten Ende die dem Ablauf gegenüberliegende Seite der Überlaufrinne kontaktiert oder mittels eines Verbindungselementes mit der dem Ablauf gegenüberliegenden Seite der Überlaufrinne verbunden ist.

Mit der erfindungsgemäßen Vorrichtung können Fahrzeugbatterien, z.B. Pkw-Batterien und Lkw-Batterien elektrochemisch behandelt, insbesondere aufgeladen werden. Dazu werden bevorzugt mehrere Batterien des gleichen Typs z.B. auf Paletten auf den einzelnen Stellplätzen innerhalb des Formierungsbehälters angeordnet. Bevorzugt weist der Formierungsbehälter sechs Stellplätze auf, die jeweils über die erforderlichen Anschlüsse für die elektrochemische Behandlung der Batterien verfügen. Während entsprechende vorbekannte Vorrichtungen sich nur für die Behandlung eines Batterietyps bzw. nur für die Behandlung von Batterien mit identischen Abmaßen eignen, können mit der erfindungsgemäßen Vorrichtung in einer Behandlung z.B. Autobatterien und in der nachfolgenden Behandlung z.B. Lkw-Batterien geladen werden.

Anders als aus dem Stand der Technik bekannt, ist die Überlaufrinne einer erfindungsgemäßen Vorrichtung nicht fest mit dem Formierungsbehälter verbunden, sondern vielmehr schwimmend in diesem angeordnet, sodass die Position der Überlaufrinne, insbesondere ihre Höhe, innerhalb des Formierungsbehälters veränderbar ist. Dies ermöglicht eine elektrochemische Behandlung von verschiedenen Fahrzeugbatterien mit unterschiedlichen Abmessungen in der erfindungsgemäßen Vorrichtung.

Bevorzugt ist die Überlaufrinne der erfindungsgemäßen Vorrichtung mit ihrer Längsachse parallel zur Längsachse des Formierungsbehälters in diesem angeordnet und wird von der in dem Formierungsbehälter befindlichen Flüssigkeit, z.B. Wasser, umspült. Dabei ist die Überlaufrinne mit ihrem der offenen Seite gegenüberliegenden Ablauf bevorzugt auf eine im Boden des Formierungsbehälters angeordnete Auslassöffnung aufgesteckt. Der Ablauf der Überlaufrinne und die Auslassöffnung im Boden des Formierungsbehälters weisen daher vorzugsweise eine gleichartige Geometrie auf, beispielsweise können beide einen rechteckigen oder runden Querschnitt aufweisen, die sich im Durchmesser nur geringfügig unterscheiden, sodass die Verbindung beim Aufstecken der Überlaufrinne auf die Auslassöffnung im Wesentlichen flüssigkeitsdicht ist. Vorzugsweise beträgt der Flüssigkeitsverlust an dieser Steckverbindung stündlich nicht mehr als 500 L, insbesondere nicht mehr als 100 L und noch bevorzugter nicht mehr als 50 L.

Auf der dem Ablauf gegenüberliegenden Seite der Überlaufrinne weist die erfindungsgemäße Vorrichtung ein Trägerelement auf, das mit seiner Längsachse bevorzugt parallel zur Längsachse der Überlaufrinne angeordnet ist. Zwischen dem Trägerelement und der Überlaufrinne besteht dabei keine feste Verbindung, sondern das Trägerelement dient dazu, die Überlaufrinne entgegen ihrem Auftrieb in dem Formierungsbehälter auf eine gewünschte Höhe herunterzudrücken. Das Trägerelement weist dazu zumindest eine Gewindebohrung mit darin angeordneter Gewindespindel auf, wobei das nicht in der Gewindebohrung angeordnete Ende der Gewindespindel die Überlaufrinne kontaktiert oder mit dieser über ein Verbindungselement verbunden ist. Dazu weist die Überlaufrinne bevorzugt einen Auflagepunkt auf, auf den über die Gewindespindel Druck ausgeübt werden kann, sodass die Überlaufrinne innerhalb des Formierungsbehälters heruntergedrückt wird. Weniger bevorzugt kann die in der Gewindebohrung des Trägerelements angeordnete Gewindespindel auch eine lösbare feste Verbindung mit der Überlaufrinne eingehen, z.B. eine kraftschlüssige oder formschlüssige Verbindung.

Gemäß einer bevorzugten Ausführungsform weist das Trägerelement der erfindungsgemäßen Vorrichtung zwei voneinander beabstandete Gewindebohrungen auf, in denen jeweils eine Gewindespindel angeordnet ist, wobei die Gewindespindeln mit ihren jeweiligen nicht in den Gewindebohrungen angeordneten Enden die Überlaufrinne kontaktieren, z.B. an zwei voneinander beabstandeten auf der Überlaufrinne befindlichen Auflagepunkten. Der Vorteil dieser Ausführungsform gegenüber einer Ausführungsform der erfindungsgemäßen Vorrichtung, in der das Trägerelement nur eine Gewindebohrung mit darin angeordneter Gewindespindel aufweist, liegt darin, dass eine gleichmäßigere Druckverteilung ermöglicht wird und die Überlaufrinne gleichmäßig in dem Formierungsbehälter bewegt werden kann, wobei ihre Längsachse während der Bewegung völlig horizontal bzw. im Wesentlichen horizontal verbleibt.

Für eine noch gleichmäßigere Bewegbarkeit der Überlaufrinne innerhalb des Formierungsbehälters weist das Trägerelement gemäß einer Ausführungsform zumindest zwei Längselemente auf, die beabstandet voneinander jeweils mit ihrer Längsachse senkrecht zur Längsachse des Trägerelementes angeordnet sind und in Führungskanäle eingreifen, die in der Überlaufrinne verlaufen. Beispielsweise können die Längselemente Führungsschienen, Stäbe oder Rohre sein. Die Führungskanäle in der Überlaufrinne, die vorzugsweise senkrecht zu deren Längsachse verlaufen, können beispielsweise Rohre sein, oder im einfachsten Fall einfach Ausnehmungen bzw. Kanäle innerhalb der Überlaufrinne.

In einer alternativen Ausführungsform, die ebenfalls eine noch gleichmäßigere Bewegbarkeit der Überlaufrinne innerhalb des Formierungsbehälters erlaubt, weist nicht das Trägerelement, sondern die Überlaufrinne zumindest zwei Längselemente, z.B. Führungsschienen, Stäbe oder Rohre auf, die beabstandet voneinander jeweils mit ihrer Längsachse senkrecht zur Längsachse der Überlaufrinne angeordnet sind und in Führungskanäle, z.B. Rohre oder Ausnehmungen, eingreifen, die in dem Trägerelement verlaufen.

In beiden vorgenannten Ausführungsformen wird die Überlaufrinne daher bei einer Horizontalbewegung an dem Trägerelement geführt, ohne fest mit diesem verbunden zu sein. Insbesondere die Führung an dem Trägerelement erlaubt dabei eine gleichmäßige Bewegung der Überlaufrinne, bei der die Längsachse der Überlaufrinne horizontal verbleibt oder zumindest im wesentlichen horizontal, sodass die Abweichung auf die Länge der Überlaufrinne betrachtet vorzugsweise max. 1 mm beträgt.

In den verschiedenen vorgenannten Ausführungsformen ist das Material, aus dem die Überlaufrinne gefertigt ist, vorzugsweise ein thermoplastischer Kunststoff, insbesondere Polyethylen oder Polypropylen. Dieser kann beispielsweise auch Additive enthalten, welche sich auf die Farbgebung des Kunststoffs auswirken, beispielsweise kann der thermoplastische Kunststoff daher nicht nur schwarzes Polyethylen sein, sondern beispielsweise auch weißes oder blaues Polyethylen. Bevorzugt weist der Kunststoff dabei eine gute Beständigkeit gegenüber tiefen Temperaturen auf, z.B. eine Beständigkeit bis - 30 °C. Weiterhin ist der Kunststoff säurebeständig, insbesondere gegenüber 78 %-iger Schwefelsäure.

Das Trägerelement und vorzugsweise auch die Gewindespindel und/oder die optionalen Längselemente, die an dem Trägerelement angeordnet sind, sind bevorzugt aus säurebeständigem Stahl, z.B. aus V4A-Stahl, welcher ebenfalls beständig gegenüber 78 %-iger Schwefelsäure ist. Ein bevorzugtes Trägerelement ist daher z.B. eine Traverse aus V4A-Stahl.

Die Erfindung betrifft weiterhin auch ein Verfahren zur elektrochemischen Behandlung von Fahrzeugbatterien. Dieses weist die folgenden Schritte auf:
- Bereitstellen einer Vorrichtung, die einen Formierungsbehälter mit zumindest einem Stellplatz zur Aufnahme zumindest einer Fahrzeugbatterie sowie eine Überlaufrinne mit einem Ablauf umfasst, wobei die Vorrichtung auf der dem Ablauf gegenüberliegenden Seite der Überlaufrinne ein Trägerelement mit zumindest einer Gewindebohrung aufweist, in der eine Gewindespindel angeordnet ist, die mit ihrem dem Ablauf zugewandten Ende die dem Ablauf gegenüberliegenden Seite der Überlaufrinne kontaktiert oder mittels eines Verbindungselementes mit der dem Ablauf gegenüberliegenden Seite der Überlaufrinne verbunden ist,
- Variieren der Höhe der Überlaufrinne in Relation zu dem Formierungsbehälter durch Betätigung der zumindest einen Gewindespindel,
- Anordnen zumindest einer Fahrzeugbatterie auf dem zumindest einen Stellplatz,
- elektrochemische Behandlung der zumindest einen Fahrzeugbatterie.

Der Schritt des Variierens der Höhe der Überlaufrinne in Relation zu dem Formierungsbehälter erfolgt in dem erfindungsgemäßen Verfahren in Kenntnis des zu behandelnden Batterietyps.

Um die Überlaufrinne dabei in dem Formierungsbehälter nach unten zu bewegen, d.h. von dem Trägerelement weg, wird die zumindest eine Gewindespindel betätigt. In der bevorzugten Ausführungsform, in der die Vorrichtung zwei Gewindebohrungen innerhalb des Trägerelementes und entsprechend auch zwei darin angeordnete Gewindespindeln aufweist, werden beide Gewindespindeln betätigt, sodass diese von Seiten des Trägerelements auf die Überlaufrinne drücken, z.B. an zwei voneinander beabstandeten Auflagepunkten, und die Überlaufrinne somit in Richtung des Bodens des Formierungsbehälters drücken.

Um die Überlaufrinne in dem Formierungsbehälter nach oben zu bewegen, d.h. in Richtung des Trägerelementes, wird ebenfalls die zumindest eine Gewindespindel bzw. werden ebenfalls die zwei Gewindespindeln betätigt, jedoch durch Drehung in entgegengesetzte Richtung. Die Gewindespindeln üben dadurch weniger Druck auf die Überlaufrinne aus, weshalb diese sich durch den Auftrieb in Richtung des Trägerelementes bewegt, bis sie wieder mit ihren Auflagepunkten die Gewindespindeln kontaktiert.

Weist die Überlaufrinne die richtige Höhe für den zu behandelnden Batterietyp auf, so können die Batterien innerhalb des Formierungsbehälters auf den Stellplätzen angeordnet werden. Beispielsweise werden in dem Formierungsbehälter eine Vielzahl von Batterien, die bevorzugt auf Paletten angeordnet sind, zusammen mit den Paletten auf insgesamt sechs Stellplätzen angeordnet. Nun folgt die elektrochemische Behandlung der Batterien.

Gemäß einer bevorzugten Ausführungsform weist das erfindungsgemäße Verfahren auch einen Schritt der Entfernung der Batterien nach der elektrochemischen Behandlung aus dem Formierungsbehälter auf, sowie bevorzugt auch einen Schritt der erneuten Variation der Höhe der Überlaufrinne in Relation zu dem Formierungsbehälter, wobei die Überlaufrinne vorzugsweise auf eine im Vergleich zu der vorigen Behandlung abweichende Höhe gebracht wird.

Optional erfolgt der Schritt des Variierens der Höhe der Überlaufrinne in Relation zu dem Formierungsbehälter durch Betätigung der zumindest einen Gewindespindel automatisch bzw. vollautomatisch. Dazu können die zu behandelnden Batterien bzw. die Transportbehältnisse, z.B. die Paletten, auf denen die Batterien angeordnet sind, ein computerlesbares Identifizierungsmerkmal aufweisen, mittels dessen der Batterietyp identifiziert werden kann. In dieser Ausführungsform wird die Überlaufrinne automatisch bewegt, nachdem das Identifizierungsmerkmal von einer Einheit erfasst wurde. Denn die Einheit ist dabei eingerichtet, die Identifizierungsmerkmale der Batterien zu empfangen und diese einer erforderlichen Höhe der Überlaufrinne zuzuordnen, auf die diese einzustellen ist.

Weiterhin betrifft die Erfindung auch die Verwendung einer erfindungsgemäßen Vorrichtung zur Beladung bzw. Aufladung von Fahrzeugbatterien.

### Genaue Beschreibung der Erfindung

Die Erfindung wird nun genauer anhand von Ausführungsbeispielen und mit Bezug auf die Figuren beschrieben, in denen
- Figur 1 eine schematische Ansicht einer aus dem Stand der Technik bekannten Vorrichtung zur elektrochemischen Behandlung von Fahrzeugbatterien zeigt,
- Figur 2 eine schematische Ansicht einer erfindungsgemäßen Vorrichtung zur elektrochemischen Behandlung von Fahrzeugbatterien zeigt, und
- Figur 3 eine schematische Ansicht einer weiteren Ausführungsform einer erfindungsgemäßen Vorrichtung zur elektrochemischen Behandlung von Fahrzeugbatterien zeigt.

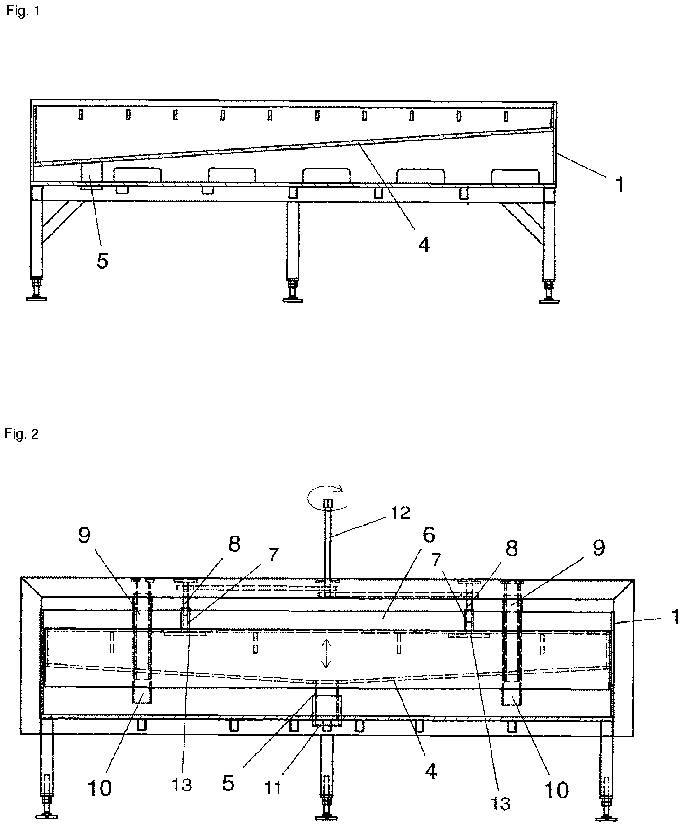

In der Figur 1 ist eine aus dem Stand der Technik bekannte Vorrichtung zur elektrochemischen Behandlung von Fahrzeugbatterien gezeigt, welche einen Formierungsbehälter **1** mit darin fest eingeschweißter Überlaufrinne **4** aufweist. Wie bereits im Voranstehenden erläutert, ist es bei dieser Vorrichtung nicht möglich, die Höhe der Überlaufrinne **4** zu verstellen, sodass diese sich nur zur Behandlung von Batterien mit exakt gleichen Abmaßen eignet.

In der Figur 2 ist eine erfindungsgemäße Vorrichtung zur elektrochemischen Behandlung von Fahrzeugbatterien gezeigt. Diese weist einen flüssigkeitsgefüllten Formierungsbehälter **1** mit darin angeordneter höhenverstellbarer Überlaufrinne **4** und mit einem Trägerelement **6** auf. Die Überlaufrinne **4** ist an keiner Stelle fest mit dem Formierungsbehälter **1** oder mit dem Trägerelement **6** verbunden. An ihrer tiefsten Stelle, die dem Boden des Formierungsbehälters **1** zugewandt ist, weist die Überlaufrinne **4** einen Ablauf **5** auf, der eine lösbare Steckverbindung mit der Auslassöffnung **11** im Boden des Formierungsbehälters **1** eingeht. Diese Steckverbindung kann z.B. durch zwei zueinander passende Rechteckprofile oder durch zwei ineinander steckbare Rohre gebildet werden. Die Steckverbindung ist dabei so konzipiert, dass der Flüssigkeitsverlust an der Verbindung weniger als 500 L / h beträgt, vorzugsweise weniger als 50 L / h.

In dem Trägerelement **6** sind in der gezeigten Ausführungsform zwei voneinander beabstandete Gewindebohrungen **7** angeordnet, in welchen jeweils eine Gewindespindel **8** angeordnet ist. Die Gewindespindeln **8** sind über ein gemeinsames Stellelement **12** bewegbar. Bei Drehung des Stellelements **12** wird daher die Position der Gewindespindeln **8** innerhalb der Gewindebohrungen **7** verändert. Das Stellelement **12** ist dabei bevorzugt eingerichtet, bei Drehung um einen bestimmten Winkel die Gewindespindeln **8** innerhalb der Gewindebohrungen **7** um eine vorbestimmte Distanz nach oben (d.h. in Richtung des Trägerelementes) oder nach unten (d.h. in Richtung der Überlaufrinne) zu bewegen, z.B. um 1 bis 10 mm und insbesondere um 5 mm.

Die Gewindespindeln **8** sind dabei erfindungsgemäß nicht fest mit der Überlaufrinne **4** verbunden, sondern kontaktieren diese nur mit ihren nicht in den Gewindebohrungen **7** des Trägerelements **6** befindlichen Enden, vorzugsweise an Auflagepunkten **13.**

Um eine absolut gleichmäßige Höhenverstellbarkeit der Überlaufrinne **4** zu gewährleisten, weist die erfindungsgemäße Vorrichtung in der gezeigten Ausführungsform zwei voneinander beabstandete Längselemente **9** auf, die mit ihrer Längsachse senkrecht zur Längsachse des Trägerelementes **6** an diesem befestigt sind, z.B. einteilig mit diesem ausgebildet oder mit diesem verschweißt sind. Vorzugsweise sind sowohl das Trägerelement **6** als auch die Längselemente **9** aus säurebeständigem Stahl. Die Längselemente **9** sind in Führungskanälen **10** geführt, welche in der Überlaufrinne **4** verlaufen. Diese Führungskanäle **10** sind bevorzugt in die Überlaufrinne **4** eingelassene Kunststoffröhrchen.

Die Höhenverstellbarkeit der Überlaufrinne **4** in Richtung des Bodens des Formierungsbeckens **1** erfolgt also durch Betätigung der Gewindespindeln **8** bzw. durch Betätigung des Stellelements **12,** welches dann die Gewindespindeln **8** in Richtung des Bodens des Formierungsbeckens 1 bewegt, wobei die Gewindespindeln **8** die Überlaufrinne **4** nach unten drücken, vorzugsweise durch Kontaktieren an den Auflagepunkten **13.**

Ebenfalls durch Betätigung der Gewindespindeln **8** bzw. durch Betätigung des Stellelements **12,** jedoch in entgegengesetzte Richtung, ist die Überlaufrinne **4** nach oben bewegbar, d.h. von dem Boden des Formierungsbehälters **1** entfernbar. Dabei bewegen sich die Gewindespindeln **8** innerhalb der Gewindebohrungen **7** in Richtung des Trägerelementes **6,** und die Überlaufrinne **4** wird durch den eigenen Auftrieb in dem flüssigkeitsgefüllten Formierungsbehälter **1** wieder gegen die Gewindespindeln **8** gedrückt.

Sowohl bei der Aufwärtsbewegung als auch bei der Abwärtsbewegung wird die Überlaufrinne **4** dabei an den Längselementen **9** entlanggeführt, sodass die Überlaufrinne **4** während der gesamten Bewegung gerade, d.h. mit horizontal verlaufender Längsachse, innerhalb des Formierungsbehälters **1** angeordnet ist.

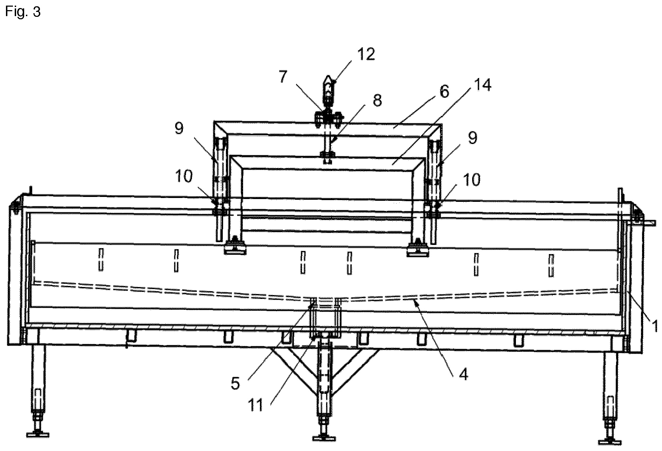

In der Figur 3 ist eine weitere Ausführungsform einer erfindungsgemäßen Vorrichtung zur elektrochemischen Behandlung von Fahrzeugbatterien gezeigt. Diese weist ebenfalls einen flüssigkeitsgefüllten Formierungsbehälter **1** mit darin angeordneter höhenverstellbarer Überlaufrinne **4** und mit einem Trägerelement **6** auf. Das Trägerelement **6** ist in der gezeigten Ausführungsform ein Aufbau auf dem Formierungsbehälter **1,** an dessen Oberseite eine Gewindebohrung **7** angeordnet ist, in die eine Gewindespindel **8** eingreift. Die Gewindespindel **8** ist dabei über ein Stellelement **12** in der Gewindebohrung **7** bewegbar.

In der gezeigten Ausführungsform ist das dem Ablauf **5** zugewandte Ende der Gewindespindel **8** über ein Verbindungselement **14** mit der dem Ablauf **5** gegenüberliegenden Seite der Überlaufrinne **4** verbunden. Dabei kontaktiert das Verbindungselement **14** die Überlaufrinne **4** an zwei voneinander beabstandeten Punkten mit jeweils gleichem Abstand zu der Gewindespindel **8.**

Gemäß der bevorzugten Ausführungsform weist die erfindungsgemäße Vorrichtung zwei voneinander beabstandete Längselemente **9** auf, die mit ihrer Längsachse senkrecht zur Längsachse des Trägerelementes **6** an diesem befestigt sind, z.B. einteilig mit diesem ausgebildet oder mit diesem verschweißt sind. Vorzugsweise sind sowohl das Trägerelement **6** als auch die Längselemente **9** aus säurebeständigem Stahl. Die Längselemente **9** sind in Führungskanälen **10** geführt, welche in der Überlaufrinne **4** verlaufen. Diese Führungskanäle **10** sind bevorzugt in die Überlaufrinne **4** eingelassene Kunststoffröhrchen.

Die Höhenverstellbarkeit der Überlaufrinne **4** in Richtung des Bodens des Formierungsbeckens **1** erfolgt also durch Betätigung des Stellelements **12,** welches dann die mit dem Verbindungselement **14** verbundene Gewindespindel **8** in Richtung des Bodens des Formierungsbeckens 1 bewegt, sodass das Verbindungselement **14** auf die Überlaufrinne **4** drückt.

Ebenfalls durch Betätigung des Stellelements **12,** jedoch in entgegengesetzte Richtung, ist die Überlaufrinne **4** nach oben bewegbar, d.h. weiter von dem Boden des Formierungsbehälters **1** entfernbar. Dabei bewegt sich die Gewindespindel **8** innerhalb der Gewindebohrung **7** in Richtung des Trägerelementes **6,** und die Überlaufrinne **4** wird durch den eigenen Auftrieb in dem flüssigkeitsgefüllten Formierungsbehälter **1** wieder gegen das mit der Gewindespindel **8** verbundene Verbindungselement **14** gedrückt.

Die in der vorstehenden Beschreibung, in den Figuren sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste:

- 1: Formierungsbehälter
- 2: Stellplatz
- 3: Fahrzeugbatterie
- 4: Überlaufrinne
- 5: Ablauf
- 6: Trägerelement
- 7: Gewindebohrung
- 8: Gewindespindel
- 9: Längselement
- 10: Führungskanal
- 11: Auslassöffnung
- 12: Stellelement
- 13: Auflagepunkt
- **14**: Verbindungselement

## Patentansprüche

1. Vorrichtung zur elektrochemischen Behandlung von Fahrzeugbatterien, wobei die Vorrichtung einen Formierungsbehälter (1) mit zumindest einem Stellplatz zur Aufnahme zumindest einer Fahrzeugbatterie (3) sowie eine Überlaufrinne (4) mit einem Ablauf (5) umfasst,
**dadurch gekennzeichnet, dass** die Vorrichtung auf der dem Ablauf (5) gegenüberliegenden Seite der Überlaufrinne (4) ein Trägerelement (6) mit zumindest einer Gewindebohrung (7) aufweist, in der eine Gewindespindel (8) angeordnet ist, die mit ihrem dem Ablauf (5) zugewandten Ende die dem Ablauf (5) gegenüberliegende Seite der Überlaufrinne (4) kontaktiert oder mittels eines Verbindungselementes (14) mit der dem Ablauf (5) gegenüberliegenden Seite der Überlaufrinne (4) verbunden ist.

2. Vorrichtung nach Anspruch 1, **dadurch gekennzeichnet, dass** das Trägerelement (6) zwei voneinander beabstandete Gewindebohrungen (7) aufweist, in denen jeweils eine Gewindespindel (8) angeordnet ist, die mit ihrem dem Trägerelement (6) abgewandten Ende die dem Ablauf (5) gegenüberliegenden Seite der Überlaufrinne (4) kontaktiert.

3. Vorrichtung nach einem der Ansprüche 1 oder 2, **dadurch gekennzeichnet, dass** das Trägerelement (6) zumindest zwei Längselemente (9) aufweist, die beabstandet voneinander jeweils mit ihrer Längsachse senkrecht zur Längsachse des Trägerelementes (6) angeordnet sind und in Führungskanäle (10) eingreifen, die in der Überlaufrinne (4) verlaufen.

4. Vorrichtung nach einem der Ansprüche 1 oder 2, **dadurch gekennzeichnet, dass** die Überlaufrinne (4) zumindest zwei Längselemente (9) aufweist, die beabstandet voneinander jeweils mit ihrer Längsachse senkrecht zur Längsachse der Überlaufrinne (4) angeordnet sind und in Führungskanäle (10) eingreifen, die in dem Trägerelement (6) verlaufen.

5. Vorrichtung nach einem der voranstehenden Ansprüche, **dadurch gekennzeichnet, dass** das Material, aus dem die Überlaufrinne (4) gefertigt ist, ein thermoplastischer Kunststoff ist.

6. Vorrichtung nach Anspruch 5, **dadurch gekennzeichnet, dass** der thermoplastische Kunststoff Polyethylen oder Polypropylen umfasst oder daraus besteht.

7. Vorrichtung nach einem der voranstehenden Ansprüche, **dadurch gekennzeichnet, dass** das Trägerelement (6) und/oder die Gewindespindel (8) und/oder die an dem Trägerelement (6) angeordneten zumindest zwei Längselemente (9) aus Stahl sind.

8. Vorrichtung nach einem der voranstehenden Ansprüche, **dadurch gekennzeichnet, dass** die Überlaufrinne (4) schwimmend in dem Formierungsbehälter (1) angeordnet ist und lösbar mit dem Trägerelement (6) verbunden ist.

9. Verfahren zur elektrochemischen Behandlung von Fahrzeugbatterien, **gekennzeichnet durch** die Schritte
- Bereitstellen einer Vorrichtung, die einen Formierungsbehälter (1) mit zumindest einem Stellplatz zur Aufnahme zumindest einer Fahrzeugbatterie (3) sowie eine Überlaufrinne (4) mit einem Ablauf (5) umfasst, wobei die Vorrichtung auf der dem Ablauf (5) gegenüberliegenden Seite der Überlaufrinne (4) ein Trägerelement (6) mit zumindest einer Gewindebohrung (7) aufweist, in der eine Gewindespindel (8) angeordnet ist, die mit ihrem dem Ablauf (5) zugewandten Ende die dem Ablauf (5) gegenüberliegende Seite der Überlaufrinne (4) kontaktiert oder mittels eines Verbindungselementes (14) mit der dem Ablauf (5) gegenüberliegenden Seite der Überlaufrinne (4) verbunden ist,
- Variieren der Höhe der Überlaufrinne (4) innerhalb des Formierungsbehälters (1) durch Betätigung der zumindest einen Gewindespindel (8),
- Anordnen zumindest einer Fahrzeugbatterie (3) auf dem zumindest einen Stellplatz (2),
- elektrochemische Behandlung der zumindest einen Fahrzeugbatterie (3).

10. Verwendung einer Vorrichtung nach einem der Ansprüche 1 bis 8 zur Aufladung von Fahrzeugbatterien.
